# EUROPÄISCHE PATENTSCHRIFT

(11) **EP 2 915 701 B1**
(45) Veröffentlichungstag und Bekanntmachung des Hinweises auf die Patenterteilung: **06.09.2017**
(21) Anmeldenummer: 15157251.8
(22) Anmeldetag: 02.03.2015
(51) Int. Cl.: B60R 1/06

(54) **Rückspiegelverstellanordnung für Fahrzeuge, insbesondere für Nutzfahrzeuge, sowie Rückspiegel hiermit**
Rear view mirror adjustment assembly for vehicles, in particular for commercial vehicles, and rear view mirror with same
Système de réglage de rétroviseur pour véhicules, en particulier pour véhicules utilitaires et rétroviseur en étant équipé

(30) Priorität: 07.03.2014 DE 102014204275
(43) Veröffentlichungstag der Anmeldung: 09.09.2015
(73) Patentinhaber: MEKRA LANG GmbH & Co. KG, 91465 Ergersheim (DE)
(72) Erfinder: Lang, Werner Dr., 91465 Ergersheim (DE); Heger, Sebastian, 91478 Markt Nordheim (DE); Felbinger, Willi, 91478 Markt Nordheim (DE); Popp, Albrecht, 91629 Weihenzell (DE)
(74) Vertreter: Winter, Brandl, Fürniss, Hübner, Röss, Kaiser, Polte - Partnerschaft mbB

(56) Entgegenhaltungen:
- US-A- 2 664 029
- US-A- 4 444 466
- US-A- 4 979 810
- US-A1- 2003 077 114

## Beschreibung

Die Erfindung betrifft eine Rückspiegelverstellanordnung für Fahrzeuge, insbesondere für Nutzfahrzeuge, sowie einen Rückspiegel für derartige Fahrzeuge, der wenigstens eine derartige Rückspiegelverstellanordnung aufweist.

Rückspiegelverstellanordnungen für Fahrzeuge weisen in der Regel ein erstes (fahrzeugseitiges) Element auf, das mittels einer Befestigungsanordnung, beispielsweise einem Auslegerarm oder dergleichen im Wesentlichen unbeweglich an dem Fahrzeug festlegbar ist, sowie ein zweites (bewegliches) Element, das mittels eines Schwenklagers gegenüber dem fahrzeugseitigen Element um wenigstens eine Achse verstellbar ist und wenigstens eine reflektierende Fläche, in der Regel eine Spiegelfläche, aufweist.

Die Beweglichkeit oder Verstellbarkeit des beweglichen Elements gegenüber dem fahrzeugseitigen Element bedingt konstruktionstechnisch Spalte oder Freiräume, zumindest jedoch Gelenk- oder Fügespalte zwischen relativ zueinander beweglichen oder verstellbaren Elementen oder Bauteilen, um den oder die benötigten Freiheitsgrade für die jeweiligen Verstellbewegungen sicherstellen zu können.

Diese (Gelenk- oder Füge-)Spalte können sich - beispielsweise bei sogenannten Kopfverstellern - direkt zwischen dem fahrzeugseitigen Element und dem hieran beweglich oder verstellbar gelagerten Spiegelkopf befinden. Bei sogenannten Glasverstellern kann sich ein derartiger Spalt wiederum zwischen dem fahrzeugseitigen Element und der die reflektierende Fläche (das Spiegelglas) tragenden Spiegelträgerplatte befinden. Bei einer weiteren bekannten Kopfversteller-Bauart stützt das gegenüber dem fahrzeugseitigen Element bewegliche oder verstellbare Element die Spiegelträgerplatte. An der Spiegelträgerplatte wiederum ist das Gehäuse des Spiegelkopfs festgelegt und bewegt sich hiermit, wobei das Gehäuse soweit nach hinten gezogen ist, dass es die Verbindungsstelle zwischen fahrzeugseitigem und beweglichem Element zumindest teilweise überdeckt. Neben dem konstruktionstechnischen Fügespalt zwischen fahrzeugseitigem und beweglichem Element liegt bei dieser Bauform noch ein konstruktionstechnisch bedingter Spalt oder Freiraum zwischen dem Rand der Öffnung in dem Spiegelgehäuse und dem Eingriffsbereich zwischen fahrzeugseitigem und beweglichem Element vor (vergleiche zum Beispiel EP 2 195 195 B1).

Aus der DE 198 03 459 A1 ist ein Rückspiegel bekannt, bei welchem ein umlaufender Spalt zwischen einer Glaseinheit bestehend aus Spiegelelement und Spiegelträgerplatte und einem die Glaseinheit einfassenden Gehäuse durch ein elastisch verformbares Dämpfungselement verschlossen ist, welches primär unerwünschte Vibrationsbewegungen der Glaseinheit dämpfen oder verhindern soll. Als Nebeneffekt dichtet dieses Dämpfungselement den Spalt auch gegen Umwelteinflüsse ab.

Ein ähnliches Bauprinzip beschreibt die DE 915 538 B. Auch hier wird ein umlaufender Spalt zwischen einer Glaseinheit bestehend aus Spiegelelement und Spiegelträgerplatte und einem die Glaseinheit einfassenden Gehäuse durch ein elastisch verformbares Element verschlossen, welches eine Zentrierung der Glaseinheit im Gehäuse und damit eine Zentrierung einer Verstelleinheit hierfür erzielen soll. Ähnlich wie bei der DE 198 03 459 A1 ergibt sich als Nebeneffekt eine Abdichtung des Spalts gegen Umwelteinflüsse.

Aus der US 2003/0077114 A1 ist ein Dichtungsring am Eintritt eines Fügespalts zwischen den Kalottenoberflächen eines Kugelgelenks bekannt. Die US 4 444 466 A zeigt die Anordnung eines Dichtungsrings zwischen einem Spiegelträger und einer Lagervorrichtung hierfür und die US 4 979 810 A zeigt einen Dichtungsring im Antrieb eines Glasverstellers.

Schließlich zeigt die US 2,664,029 - von der die vorliegende Erfindung ausgeht - eine Rückspiegelverstellanordnung mit einem Kugelgelenk zwischen fahrzeugseitigem Element und einem hierzu beweglichen Element (Spiegelkopf), wobei zwischen den beiden Elementen eine Dichtung in Form eines O-Rings angeordnet ist, welche unmittelbar in dem Fügespalt zwischen den beiden beweglichen Elementen bzw. den konkaven und konvexen Kalottenoberflächen hiervon liegt. Der von der Dichtungsanordnung nicht erfasste Bereich der Kugelgelenkflächen, insbesondere der konvexen Kalottenfläche ist Witterungseinflüssen etc. nach wie vor ausgesetzt. Dies stellt in der Praxis ein Problem dar, denn generell sind die Spalte oder Freiräume zwischen einer Glaseinheit oder Glasbaugruppe bestehend aus Spiegelelement und Spiegelträgerplatte und einem die Glaseinheit einfassenden Gehäuse zwar einerseits konstruktions- und funktionstechnisch unabdingbar, andererseits sind sie aber auch Grund für Probleme und mögliche Störungen im täglichen Betrieb.

Wasser, Verschmutzungen in Form von Staub, Streusalz oder dergleichen, Eiskristalle und andere Fremdkörper können in die Spalte gelangen und die Funktionsfähigkeit, d.h. Gängigkeit der Verstellung zwischen den jeweiligen Elementen im Laufe der Zeit oder zumindest vorübergehend beeinträchtigen oder gar hemmen. Insbesondere bei den sehr engen Gelenk- oder Fügespalten zwischen zwei zueinander beweglichen Gelenk- oder Scharnierteilen können z.B. Verschmutzungen sehr schnell die Gängigkeit der Gelenk- oder Scharnierverbindung beeinträchtigen oder sogar hemmen. Bei einem Kopfversteller etwa gemäß der oben genannten EP 2 195 195 B1 kommt erschwerend hinzu, dass der dortige Spalt zwischen der Gehäuseöffnung und dem die Gehäuseöffnung durchragenden Verstellmechanismus in Fahrtrichtung des Fahrzeugs weist, so dass der Fahrtwind Niederschlag, aufgewirbelte Fremdkörper oder dergleichen durch den Spalt in das Innere des Spiegelkopfgehäuses treibt.

Man ist zwar bestrebt, diesen Spalt zwischen der Gehäuseöffnung und dem Verstellmechanismus, insbesondere dem fahrzeugseitigen Element hiervon, so eng wie möglich auszubilden, um das Eindringen von Schmutz und Feuchtigkeit zu minimieren, jedoch kann dann in der Praxis das Problem der Vereisung zunehmen, das heißt der Spalt friert gewissermaßen zu, was wiederum zu Problemen bei Verstellbewegungen oder sogar zu Beschädigungen des Stellantriebs führen kann, wenn dieser gegen die zusätzliche Haltekraft der Vereisung arbeiten muss.

Bei einem Dichtungselement in dem umlaufenden Spalt zwischen der Glaseinheit aus Spiegelelement und Spiegelträgerplatte und dem die Glaseinheit einfassenden Gehäuse etwa gemäß der DE 198 03 459 A1 oder der DE 915 538 B befindet sich somit das Dichtungselement oder die Dichtungsanordnung am (umlaufenden) Außenrand der Glaseinheit bzw. Spiegelträgerplatte und wirkt hier mit einer unmittelbar benachbarten Gegenfläche zusammen, welche durch das die Glaseinheit radial umgreifende Spiegelgehäuse gebildet wird. Ein Widerstand gegen Verstellbewegungen der Glaseinheit wirkt somit durch die Reibung der Dichtungsanordnung an der Gegenfläche des Gehäuses und am radial äußersten Rand der Glaseinheit. Daher muss die eigentliche Verstelleinheit (ob nun manuell oder motorisch) ein vergleichsweise hohes Gegenmoment überwinden, was z.B. im Fall einer motorischen Verstellung entsprechend dimensionierte Antriebe und Kraftübertragungsmittel bedingt.

Bei einer Anordnung der Dichtung in dem Spalt zwischen Außenrand der Glasbaugruppe und Innenfläche des Gehäuses etwa gemäß der DE 198 03 459 A1 besteht weiterhin die Gefahr, dass die Verstellung durch Vereisung unmöglich gemacht wird. Diese Problematik ist bei der DE 198 03 459 A1 sogar angesprochen, welche als Gegenmaßnahme eine entsprechende (beispielsweise induktive) Heizvorrichtung vorschlägt, welche die Dichtungsanordnung erwärmt oder warm hält. Dies ist natürlich ein erhöhter konstruktiver und auch störanfälliger Aufbau.

Ein weiteres Problem speziell bei der Bauweise etwa gemäß der EP 2 195 195 B1 ist, dass durch den Spalt Windgeräusche verstärkt werden können oder sogar zusätzliche Pfeifgeräusche entstehen können.

Schließlich stellt ein derartiger Spalt auch eine Beeinträchtigung des gesamten optischen Erscheinungsbildes dar.

Insgesamt betrachtet ergibt sich auf jeden Fall eine Verschlechterung der funktionellen, aerodynamischen und ästhetischen Eigenschaften des gesamten Fahrzeugspiegels.

Die vorliegende Erfindung hat es sich demgegenüber zur Aufgabe gemacht, die geschilderten Probleme zu beseitigen.

Zur Lösung dieser Aufgabe schlägt die vorliegende Erfindung eine Rückspiegelverstellanordnung für Fahrzeuge, insbesondere Nutzfahrzeuge, vor, mit einem ersten fahrzeugseitigen Element, und einem zweiten beweglichen Element, welches mittels wenigstens eines Schwenklagers gegenüber dem fahrzeugseitigen Element um wenigstens eine Achse verstellbar ist und welches wenigstens eine reflektierende Fläche aufweist. Weiterhin weist eines der beiden Elemente zumindest in einem Teilbereich eine konkave, insbesondere kugelschalenförmige Oberfläche auf und das andere Element zumindest in einem Teilbereich eine hierzu komplementäre konvexe, insbesondere kugelflächenförmige Oberfläche, wobei beide Oberflächen im Zuge der Verstellung aufeinander abgleiten. Wenigstens eines der beiden Elemente weist weiterhin eine Dichtungsanordnung auf, welche zumindest teilweise in Gleitanlage mit dem entsprechenden anderen Element ist und einen Fügespalt des Schwenklagers gegen Umwelteinflüsse abdichtet. Erfindungsgemäß ist hierbei die Dichtungsanordnung im Bereich einer Gehäuseöffnung angeordnet, durch welche das fahrzeugseitige Element aus einem dem beweglichen Element zugeordneten und mit diesem beweglichen Gehäuse vorsteht, wobei die Dichtungsanordnung unmittelbar zwischen der Gehäuseöffnung und einem die konkave, insbesondere kugelschalenförmige Oberfläche definierenden Abschnitt des fahrzeugseitigen Elements und mittelbar auf den Fügespalt zwischen den beiden Elementen wirkt.

Durch die Dichtungsanordnung kann zunächst grundsätzlich eine zuverlässige Abdichtung zwischen den beiden Elementen zumindest in einem Teilbereich hergestellt werden. Hierdurch wiederum ist insbesondere das Eindringen von Schmutz, Feuchtigkeit, Salzkristallen oder dergleichen, unterbunden, sodass die Funktionsfähigkeit der Verstellanordnung gar nicht oder nur noch geringfügig beeinträchtigt ist.

Wirkt hierbei die Dichtungsanordnung unmittelbar zwischen der Gehäuseöffnung und einem die konkave, insbesondere kugelschalenförmige Oberfläche definierenden Abschnitt des fahrzeugseitigen Elements, bedeutet dies, dass die Dichtungsanordnung einen dortigen Spalt zwar nach außen hin weitestgehend, bevorzugt vollständig abdeckt und damit schützt, jedoch nicht unmittelbar an dem Spalteintritt zwischen den beiden relativ zueinander beweglichen Elementen oder Teilbereichen hiervon sitzt, sondern an einem hierzu separaten Bauteil oder Element, erfindungsgemäß im Bereich der Gehäuseöffnung, durch welche das fahrzeugseitige Element aus einem dem beweglichen Element zugeordneten und zusammen mit diesem beweglichen Gehäuse vorsteht, wobei dann die Dichtungsanordnung zwischen der Gehäuseöffnung und einem die konkave, insbesondere kugelschalenförmige Oberfläche definierenden Abschnitt des fahrzeugseitigen Elements wirkt. Eine derartige Bauweise bzw. Anordnung der Dichtungsanordnung ist insbesondere bei der bereits genannten Bauform gemäß der EP 2 195 195 B1 von Vorteil.

Befindet sich die Dichtungsanordnung somit im Nahbereich des Fügespalts der Gelenkanordnung zwischen fahrzeugfestem und hierzu beweglichen Teil der Spiegelverstellanordnung und dichtet den Fügespalt des Schwenklagers mittelbar gegen Umwelteinflüsse ab, ergibt sich der wesentliche Vorteil, dass im Gegensatz zu einer zwischen radialem Außenrand der Glasbaugruppe und dem umfassenden Spiegelgehäuse wirkenden Dichtung, wo die Verstelleinheit ein vergleichsweise hohes Gegenmoment überwinden muß, das von der Dichtungsanordnung erzeugte Gegenmoment gegen eine Verstellung aufgrund von Reib- und damit Hemmkräften wesentlich geringer ist.

Weiterhin ist die Gefahr, dass die Verstellung durch Vereisung unnötig schwergängig oder gar unmöglich gemacht wird, wesentlich verringert.

Befindet sich die Dichtungsanordnung einerseits in unmittelbarer Nähe des Fügespalts und ist andererseits die Dichtungsanordnung selbst von einer Gehäuseschale umgriffen, erfolgt durch die Gehäuseschale bereits ein erster "grober" Schutz und der letztendliche "feine" Schutz des Fügespalts vor Umwelteinflüssen erfolgt durch die eigentliche Dichtungsanordnung oder Dichtlippe. Da hierbei grobe Umwelteinflüsse bereits von der Gehäuseschale abgehalten werden, kann die Dichtlippe entsprechend feiner und damit besser wirkend und auch weniger Hemmkräfte entwickelnd ausgestaltet werden.

Schließlich sitzt die Dichtungsanordnung im unmittelbaren Nahbereich einer besonders neuralgischen Stelle und kann dort ihre Abdicht- und damit Schutzfunktion optimal entfalten.

Die Dichtungsanordnung steht bevorzugt vom Rand der Gehäuseöffnung im Wesentlichen radial nach innen vor, um eine möglichst sichere Abdichtwirkung zu erzielen und um die Gängigkeit der Verstellbewegung um die wenigstens eine Achse, jedoch hierbei in sämtliche zulässigen Richtungen, gleichförmig zu belasten.

Optimiert werden kann die Abdichtfunktion dadurch, dass die Dichtungsanordnung ringförmig geschlossen im Wesentlichen entlang der gesamten Längenerstreckung des ringförmig umlaufenden Spalteneintritts ausgebildet ist bzw. sich entlang dieser gesamten Längenerstreckung erstreckt.

Bevorzugt ist die Dichtungsanordnung durch einen flexiblen Körper gebildet, also durch einen Körper oder ein Bauteil, welches eine gewisse Eigenelastizität hat. Hierdurch können zum einen toleranzbedingte Schwankungen der Spaltgröße bei Verstellbewegungen ausgeglichen werden und zum anderen können Verkrustungen und speziell Vereisungen im Bereich der Dichtungsanordnung durch deren Flexibilität bei Verstellbewegungen leichter auf- oder abgesprengt werden.

Der flexible Körper ist bevorzugt eine Dichtlippe aus einem Elastomer oder Gummi oder einem sonstigen entsprechend elastisch eingestelltem Material. Die Dichtlippe kann gemäß einer vorteilhaften Ausgestaltungsform durch ein Zwei-Komponenten-Spritzverfahren an dem jeweiligen fahrzeugseitigen oder beweglichen Element bzw. dem Rand der Gehäuseöffnung festgelegt werden, was eine fertigungstechnisch einfach zu beherrschende, in der Praxis besonders sichere Befestigung der Dichtlippe darstellt. Alternativ kann die Dichtlippe auch angeklebt sein oder sonst wie form- und/oder stoffschlüssig befestigt werden, beispielsweise durch das Einrasten in einer Nut mit Hinterschneidung oder dergleichen.

Die Dichtlippe kann gemäß einer Ausgestaltungsform ein im Querschnitt sich verjüngendes Dreiecks-, Keil-, Trapez- oder Rundprofil aufweisen, wobei dann die freie Spitze oder das freie Ende des Profils in einem Kontaktbereich in abdichtender Anlage mit dem jeweiligen Element ist, gegenüber welchem die Abdichtung zu erfolgen hat. Bei einer ringförmig geschlossen umlaufenden Ausgestaltung der Dichtungsanordnung bzw. der Dichtlippe hiervon erfolgt somit eine linienförmige Rundum-Anlage der Dichtlippe in dem Kontaktbereich, was einerseits in der Praxis hinreichende Abdichteigenschaften mit sich bringt, andererseits die Verstellbewegungen nicht über Gebühr behindert. Darüber hinaus ergibt sich durch diese Ausgestaltung der Dichtlippe ein Abstreifeffekt bei etwaigen Verstellbewegungen, was zu einer Selbstreinigung der gesamten Verstellanordnung beiträgt.

Liegt die Dichtlippe unter Druck an dem Kontaktbereich an, kann die Dichtlippe zur Selbsthemmung in der Rückspiegelverstellanordnung beitragen oder sogar die Selbsthemmung (durch entsprechende Bauteilfriktion) vollständig bereitstellen oder bewirken.

Der Gegenstand der vorliegenden Erfindung ist auch bei Rückspiegelanordnungen anwendbar, bei denen die Gelenkflächen des wenigstens einen Schwenklagers nicht unmittelbar mit dem Füge- oder Gelenkspalt dazwischen aneinander liegen, sondern bei denen eine Gleit- oder auch Friktionsscheibe in diesem Spalt liegt. Da durch eine derartige Scheibe die Anzahl von aneinander grenzenden, spaltbildenden Flächen und damit auch die Anzahl der Fügespalte verdoppelt wird, kommt der Gegenstand der vorliegenden Erfindung besonders zum tragen.

Gegenstand der vorliegenden Erfindung ist weiterhin ein Rückspiegel für Fahrzeuge, insbesondere für Nutzfahrzeuge, wobei der Rückspiegel wenigstens eine Rückspiegelverstellanordnung in der erfindungsgemäßen Ausprägung aufweist.

Weitere Einzelheiten, Aspekte und Vorteile der vorliegenden Erfindung ergeben sich aus der nachfolgenden Beschreibung von Ausführungsformen anhand der Zeichnung.

Es zeigt:
Fig. 1 schematisch vereinfacht einen Rückspiegelkopf mit einer Rückspiegelverstellanordnung gemäß einer Ausführungsform der vorliegenden Erfindung;
Fig. 2 eine schematische Darstellung einer weiteren Ausgestaltungsform, welche nicht unmittelbar zum Gegenstand der beanspruchten Erfindung gehört;
Fig. 3 eine schematische Darstellung einer weiteren Ausgestaltungsform, welche nicht unmittelbar zum Gegenstand der beanspruchten Erfindung gehört;
Fig. 4 eine schematische Darstellung einer weiteren Ausgestaltungsform, welche nicht unmittelbar zum Gegenstand der beanspruchten Erfindung gehört;
Fig. 5 eine schematische Darstellung einer Abwandlung der Ausgestaltungsform von Fig. 4;
Fig. 6 eine schematische Darstellung einer Abwandlung der Ausgestaltungsform von Fig. 2; und
Fig. 7 eine schematische Darstellung einer Abwandlung der Ausgestaltungsform von Fig. 3, welche nicht unmittelbar zum Gegenstand der beanspruchten Erfindung gehört.

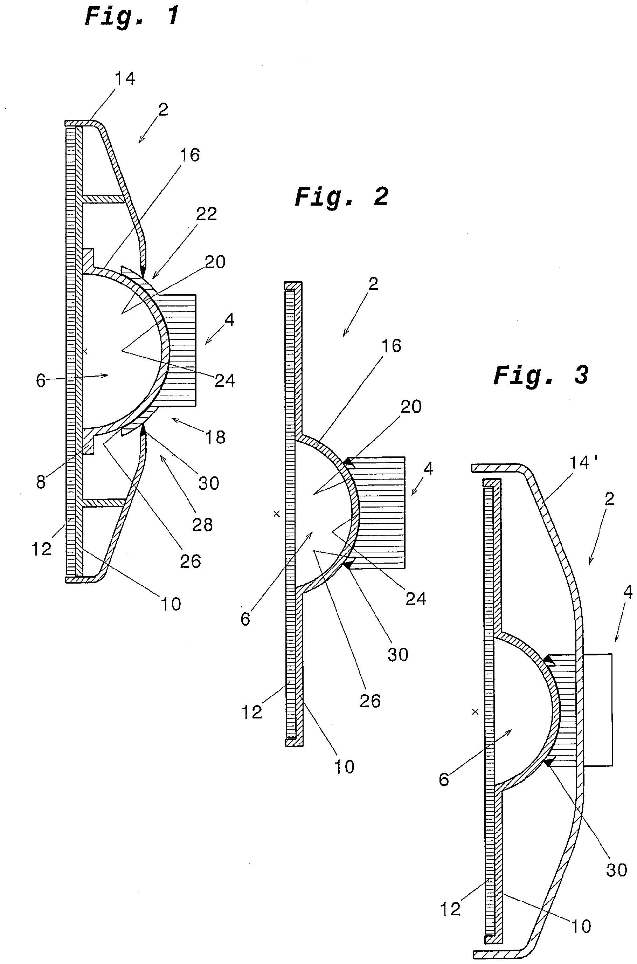

In den einzelnen Figuren der Zeichnung zeigt Fig. 1 einen Rückspiegelkopf mit einer Rückspiegelverstellanordnung gemäß einer Ausführungsform der vorliegenden Erfindung. Die verbleibenden Figuren 2 bis 7 zeigen Ausgestaltungsformen anderer Rückspiegelverstellanordnungen bzw. Dichtungsanordnungen, welche nicht unmittelbar zum Gegenstand der beanspruchten Erfindung gehören, jedoch hier im Rahmen der Beschreibung aufgeführt sind, um ein vollständiges Bild des Erfindungsgegenstandes zu vermitteln.

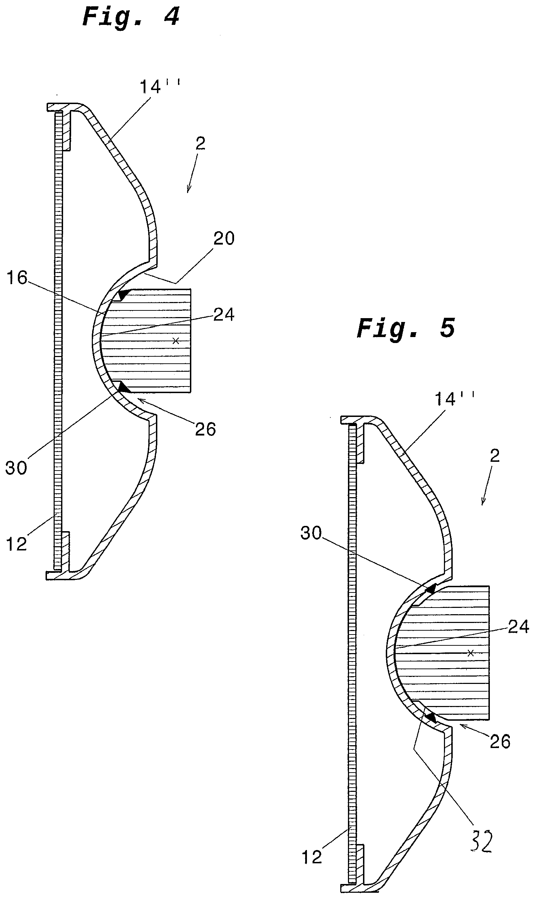

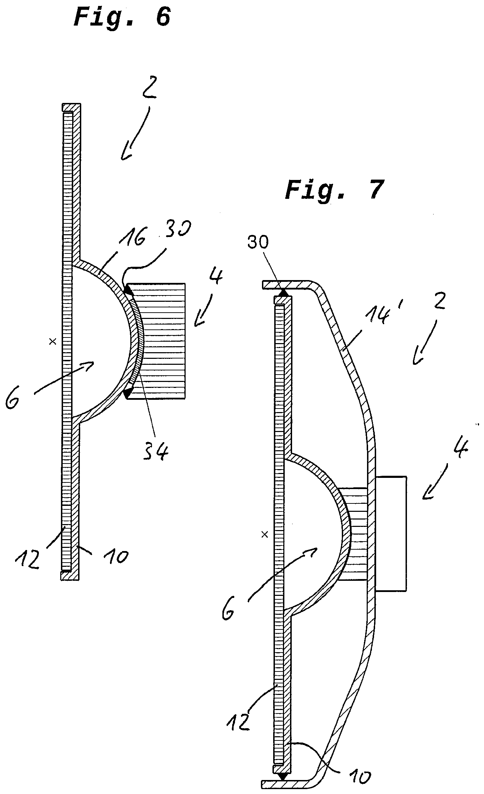

In den einzelnen Figuren der Zeichnung zeigen die Figuren 1, 4 und 5 einen Rückspiegel der sogenannten Kopfversteller-Bauweise und die Figuren 2 und 3 zeigen einen Rückspiegel der sogenannten Glasversteller-Bauweise. Die Figuren 4 und 5 unterscheiden sich in der Lage der Dichtungsanordnung, welche in Fig. 4 einem später noch zu beschreibenden unbeweglichen, fahrzeugseitigen Element zugeordnet ist und in Fig. 5 einem hierzu beweglichen Element. Diese Umkehrung der Einbaulage der Spiegelanordnung kann auch bei den Bauformen der Figuren 2 und 3 vorgenommen werden. Fig. 6 zeigt die Möglichkeit, in dem Gelenk- oder Fügespalt zweier relativ zueinander beweglicher Gelenk- oder Scharnierteile eine Gleit- oder Friktionsscheibe anzuordnen, wobei die grundsätzliche Bauweise gemäß Fig. 2 vorliegt. Fig. 7 zeigt eine andere Anordnungsmöglichkeit der Dichtungsanordnung bei einer Spiegelbauform gemaß Fig. 3.

Gleiche oder einander entsprechende Bauteile, Elemente oder Abschnitte sind in sämtlichen Figuren der Zeichnung mit gleichen Bezugszeichen versehen und wiederholte Beschreibungen hiervon erfolgen nur im Bedarfsfall.

Eine in der Zeichnung insgesamt mit 2 bezeichnete Rückspiegelverstellanordnung (nachfolgend mit "Verstellanordnung" bezeichnet) umfasst im Ausführungsbeispiel gemäß der Fig. 1, welche sich an die Bauweise gemäß der EP 2 195 195 B1 anlehnt, im Wesentlichen ein erstes fahrzeugseitiges Element 4 und ein zweites, hierzu bewegliches Element 6. Das fahrzeugseitige Element 4 ist über eine in der Zeichnung nicht näher dargestellte Befestigungsanordnung, beispielsweise einen Auslegerarm oder dergleichen mit der Fahrzeugkarosserie verbindbar. Das bewegliche Element 6 ist gegenüber dem fahrzeugseitigen Element 4 um wenigstens eine Achse beweg- oder verstellbar.

Das bewegliche Element 6 weist eine Halterung oder einen Sockel 8 auf, der eine Spiegelträgerplatte 10 lagert. An der freien Außenseite der Spiegelträgerplatte 10 ist wenigstens eine reflektierende Fläche oder ein Spiegel 12 befestigt. An der von dem Spiegel 12 abgewandten Seite der Trägerplatte 10 befindet sich ein Spiegelgehäuse 14, welches an der Spiegelträgerplatte 10 befestigt oder einteilig hiermit ausgebildet ist. Das Spiegelgehäuse 14 definiert einen Innenraum, in welchem das bewegliche Element 6 zumindest teilweise aufgenommen ist.

Das bewegliche Element 6 hat in der in Fig. 1 dargestellten Ausführungsform eine konvexe, insbesondere kugelflächenförmige Ausgestaltung, ist also beispielsweise in der Ausführungsform von Fig. 1 nach Art eines Halbzylinders (Verstellmöglichkeit um eine Achse) oder nach Art einer Halbkugel (Verstellmöglichkeit um zwei Achsen) ausgebildet. Durch das bewegliche Element 6 wird je nach dessen Ausgestaltung eine entsprechend konturierte konvexe Oberfläche 16 definiert.

Das fahrzeugseitige Element 4 weist einen konkaven, insbesondere kugelschalenförmigen Abschnitt 18 auf, der eine zu der konvexen Oberfläche 16 komplementäre konkave Oberfläche 20 definiert.

Die Oberflächen 16 und 20 sind in der aus Fig. 1 ersichtlichen Weise miteinander in Eingriff oder (Führungs)Anlage, sodass das Gehäuse 14 zusammen mit dem Spiegel 12 eine Verstellbewegung um eine oder zwei Achsen relativ zu dem fahrzeugseitigen Element 4 durchführen kann.

Damit die Verstellanordnung, welche im Wesentlichen gebildet ist aus dem fahrzeugseitigen Element 4 und dem beweglichen Element 6, zwischen der nicht dargestellten fahrzeugseitigen Befestigungsanordnung und der Spiegelträgerplatte 10 angeordnet werden kann, weist das Spiegelgehäuse 14 eine Gehäuseöffnung 22 auf. In dem in Fig. 1 dargestellten Ausführungsbeispiel ragt das Profil des beweglichen Elements 6 teilweise durch die Gehäuseöffnung 22 aus dem Inneren des Gehäuses 14 vor und umgekehrt ragt der Abschnitt 18 des fahrzeugseitigen Elements 4 mit der konkaven Oberfläche 20 durch die Gehäuseöffnung 22 teilweise in das Innere des Gehäuses 14 hinein.

Die konvexe Oberfläche 16 und die konkave Oberfläche 20 liegen entlang eines engen Gelenk- oder Fügespalts 24 aneinander, wobei der Spalt 24 eine Spaltöffnung 26 hat, welche bei der Ausgestaltung des beweglichen Elements 6 nach Art eines Halbzylinders in die Fig. oben und unten geradlinig verlaufend ausgebildet ist und welche im Fall der Ausgestaltung des beweglichen Elements 6 als Halbkugel oder Kugelkalotte ringförmig geschlossen umlaufend ausgebildet ist. Diese enge Spaltöffnung 26 und auch die hierzu weitere Gehäuseöffnung 22 sind in der eingangs geschilderten Weise anfällig für Feuchtigkeitseintritt, Verschmutzung, Vereisung etc.

Um diesem Problem zu begegnen, ist gemäß Fig. 1 wenigstens eine Dichtungsanordnung 28 vorgesehen, welche im Bereich der Gehäuseöffnung 22 in Form einer entlang der Gehäuseöffnung 22 verlaufenden Dichtlippe 30 ausgebildet ist. Die Dichtlippe 30 hat den in der Figur ersichtlichen dreieckigen oder keilförmigen Querschnitt und steht mit einer Basis der Dreiecks- oder Keilform mit dem Rand der Gehäuseöffnung 22 in Verbindung und liegt mit ihrer Spitze in einem entsprechenden Kontaktbereich an dem Abschnitt 18 des fahrzeugseitigen Elements 4 an.

Durch die Dichtlippe 30 wird der Spalt 24 zwischen dem Rand der Gehäuseöffnung 22 und dem Abschnitt 18 des fahrzeugseitigen Elements 4 bevorzugt im Wesentlichen vollständig und damit unmittelbar und direkt und so auch die Spaltöffnung 26 des Fügespalts 24 mittelbar oder indirekt verschlossen. Die Abdichtung erfolgt hierbei derart, dass die Spitze der Dichtlippe 30 unter einer konstruktiv wählbaren bzw. einstellbaren Anlagekraft an oder in dem Kontaktbereich in dem Abschnitt 18 anliegt. Die Anlagekraft der Spitze der Dichtlippe 30 kann hierbei derart sein, dass sie gerade ausreichend ist, die Gehäuseöffnung 22 sicher vor schädlichen Umwelteinflüssen zu verschließen, sie kann jedoch auch so hoch eingestellt werden, dass dann durch die mehr oder minder stark schleifende Anlage der Spitze der Dichtlippe 30 an dem Abschnitt 18 eine gewisse Reibhemmung erzielt wird. Diese Reibhemmung kann unterstützend zu etwaigen Friktionselementen in dem Spalt 24 zwischen den beiden Oberflächen 16 und 20 (vergl. spätere Beschreibung der Fig. 6) oder auch anstelle hiervon verwendet werden, um eine gewisse Schwergängigkeit des Gehäuses 14 und damit des Spiegels 12 gegenüber dem fahrzeugseitigen Element 4 zu bewirken, welche die gewählte Verstelllage zwischen den beiden Elementen 4 und 6 aufrecht erhält..

Die Befestigung der Dichtlippe 30 im Bereich der Gehäuseöffnung 22 des Spiegelgehäuses 14 kann beispielsweise dadurch erfolgen, dass die Dichtlippe 30 mit besagtem Rand durchgängig verklebt wird. Es können auch mechanische Haltemittel in Form einer Nut mit Hinterschneidung im Bereich der Gehäuseöffnung 22 seitens des Spiegelgehäuses 14 vorgesehen werden, wonach dann ein entsprechendes Gegenprofil an der Dichtlippe 30 hiermit in Eingriff gelangt. Eine weitere Vorgehensweise zur Befestigung der Dichtlippe 30 ist, diese mit einem sogenannten Zweikomponenten-Spritzverfahren direkt im Zuge der Herstellung des Spiegelgehäuses 14 am dortigen Rand der Gehäuseöffnung 22 auszubilden bzw. festzulegen.

Man erkennt aus der zeichnerischen Darstellung von Fig. 1, dass die Dichtlippe 30 der Dichtungsanordnung 28 in der Lage ist, den Spalt zwischen dem Rand der Gehäuseöffnung 22 und der Außenseite des fahrzeugseitigen Elements 4 im Bereich des dortigen Abschnitts 18 zu verschließen. Der unter Umständen vom Fahrtwind unterstützte Eintritt von Feuchtigkeit oder Regenwasser, Schmutz, Salzkristallen etc. in das Innere des Spiegelgehäuses 14 und damit unter Umständen über die Spaltöffnung 26 auch in den Spalt 24 ist damit vermieden. Auch sind sich im Inneren des Spiegelgehäuses 14 befindliche weitere Komponenten oder Bauteile, die zur Ausstattung des gesamten Rückspiegels gehören, vor derartigen Einflüssen weitaus besser geschützt.

Als Material für die Dichtlippe 30 kommen bevorzugt geeignete Elastomere, gummiartige Werkstoffe oder dergleichen zum Einsatz.

Fig. 2 zeigt ein Ausgestaltungsbeispiel, welches nicht unmittelbar zum Gegenstand der beanspruchten Erfindung gehört und bei einem sogenannten Glasversteller zum Einsatz gelangt. Hierbei weist die Verstellanordnung 2 wieder das fahrzeugseitige Element 4, das hierzu bewegliche Element 6, welches direkt mit der Spiegelträgerplatte 10 in Verbindung steht und die von der Spiegelträgerplatte 10 gehaltene Spiegelplatte 12 auf. Das bewegliche Element 6 ist analog zu der in Fig. 1 beschriebenen Weise konvex ausgebildet mit der konvexen Oberfläche 16, die unter Bildung des Gelenk- oder Fügespalts 24 in Führungsanlage mit der komplementären konkaven Oberfläche 20 des fahrzeugseitigen Elements 4 ist. Im unmittelbaren Nahbereich der Spaltöffnung 26 ist an dem fahrzeugseitigen Element 4 die Dichtungsanordnung mit der Dichtlippe 30 ausgebildet.

Die Lage und Anordnung der Dichtlippe 30 ist hierbei derart, dass die Spaltöffnung 26 des Spalts 24 von der Dichtlippe 30 zuverlässig nach außen hin abgedeckt und damit abgeschirmt ist.

Fig. 3 zeigt ein weiteres Ausgestaltungsbeispiel, welches ebenfalls nicht unmittelbar zum Gegenstand der beanspruchten Erfindung gehört und welches als Abwandlung von Fig. 2 dahingehend zu betrachten ist, als zu dem Beispiel von Fig. 2 noch ein Spiegelgehäuse 14' hinzukommt, welches im Bereich des fahrzeugseitigen Elements 4 festgelegt ist und welches die Verstellanordnung 2 mitsamt ihren Bauelementen, sowie die Spiegelträgerplatte 10 und den Spiegel 12 umgibt bzw. einfasst und einen Innenraum definiert, in welchem weitere Komponenten des Rückspiegels aufgenommen werden können.

Auch hier schützt wiederum die Dichtlippe 30 den Gelenk- oder Fügespalt 24 zwischen den beiden Oberflächen 16 und 20 vor Feuchtigkeit und/oder Schmutz.

Fig. 4 zeigt ein Ausgestaltungsbeispiel, welches ebenfalls nicht unmittelbar zum Gegenstand der beanspruchten Erfindung gehört und eine Kopfversteller-Bauweise betrifft, bei der ein Spiegelgehäuse 14" ohne Spiegelträgerplatte direkt den Spiegel 12 oder die reflektierende Fläche trägt. Das Gehäuse 14" weist eine konkave Vertiefung auf, welche die konkave Oberfläche 20 definiert. Das fahrzeugseitige Element 4 weist die hierzu komplementäre konvexe Oberfläche 16 auf, die unter Bildung des Gelenk- oder Fügespalts 24 an der konkaven Oberfläche 20 anliegt. Die Spaltöffnung 26 wird durch die Dichtlippe 30 verschlossen, welche seitens des fahrzeugseitigen Elements 4 angeordnet ist.

Fig. 5 zeigt eine Abwandlung von Fig. 4, bei der die Dichtlippe 30 auf Seiten des Spiegelgehäuses 14" im Bereich der dortigen konkaven Oberfläche 20 angeordnet ist und mit ihrer Spitze gegen die Oberfläche eines Abschnitts 32 drückt. Der Abschnitt 32 ist gemäß Fig. 5 ein gegenüber der konvexen Oberfläche 20 zurückspringender, hierzu jedoch parallel oder koaxial verlaufender Abschnitt, der in seiner Erstreckung und Ausrichtung dem maximalen Verstellweg des Gehäuses 14" gegenüber dem fahrzeugseitigen Element 4 entspricht. Dort, wo der Abschnitt 32 nicht ausgebildet ist, liegen die beiden Oberflächen 16 und 20 mit dem Gelenk- oder Fügespalt 24 dazwischen in Führungsanlage aneinander, um die Verstellbewegung des Gehäuses 14" zu ermöglichen. In dem Abschnitt 32 stellt die Dichtlippe 30 sicher, dass Feuchtigkeit, Verschmutzungen oder dergleichen nicht in den Spalt 24 zwischen den beiden Oberflächen 16 und 20 gelangen können. Die Dichtlippe kann hierbei gemäß Fig. 5 seitens des Spiegelgehäuses 14" liegen und gegen den Kontaktbereich seitens des ersten Elements 4 wirken, oder die Dichtlippe liegt auf Seiten des ersten Elements 4 und wirkt gegen das Spiegelgehäuse 14" bzw. den dortigen Kontaktbereich.

Wie bereits eingangs erwähnt, ist die konstruktive Umkehr, was die Anordnung der Dichtungsanordnung 28 bzw. der Dichtlippe 30 betrifft und wie sie in den Figuren 4 und 5 dargestellt ist, generell auch auf die Ausgestaltungsformen der Figuren 2 und 3 anwendbar, das heißt, auch dort kann die Dichtlippe 30 seitens des beweglichen Abschnitts 6 vorgesehen werden und gegen das fahrzeugseitige Element 4 wirken.

Figur 6 zeigt eine Ausgestaltungsform, welche als Abwandlung oder Modifikation von Fig. 2 gesehen werden kann. Gleiche Bezugszeichen bezeichnen gleiche Teile oder Elemente und eine redundante Beschreibung erfolgt nicht. Bei der Ausgestaltung gemäß Fig. 6 liegt zumindest in einem Teilabschnitt des Fügespalts 24 eine Scheibe 34. Durch diese Scheibe liegen die Gelenkflächen des Schwenklagers nicht unmittelbar mit dem Füge- oder Gelenkspalt 24 dazwischen aneinander. Die Scheibe 34 kann eine Gleitscheibe sein, welche die Reibung im Spalt 24 herabsetzt oder sie kann eine Friktionsscheibe sein, welche die Gängigkeit im Spalt 24 durchgehend oder in diskreten Schritten (Rasterung) schwergängig macht. Durch die Scheibe 24 wird die Anzahl von aneinander grenzenden, spaltbildenden Flächen und damit auch die Anzahl der Fügespalte verdoppelt, so dass auch die Gefahr von Störungen durch Umwelteinflüsse, Fremdkörper etc. erhöht ist.

Figur 7 zeigt eine ebenfalls nicht zum Gegenstand der vorliegenden Erfindung gehörende Ausgestaltung, welche als Abwandlung oder Modifikation von Fig. 3 gesehen werden kann. Gleiche Bezugszeichen bezeichnen wieder gleiche Teile oder Elemente und eine redundante Beschreibung erfolgt nicht. In Fig. 7 ist die Spiegelscheibe nach Art eines sogenannten Glasverstellers (gegebenenfalls zusammen mit einer entsprechenden Trägerplatte, also der Trägerplatte 10) in dem Spiegelgehäuse 14' aufgenommen, was insoweit der Bauform von Fig. 3 entspricht. Im Unterschied zu Fig. 3 liegt hierbei die Dichtungsanordnung 28 bzw. Dichtlippe 30 zwischen dem äußeren Umfangsrand der Spiegelscheibe 12 (und/oder Trägerplatte 10) und einer diesem Umfangsrand gegenüber liegenden Innenfläche des Spiegelgehäuses 14' im Bereich der dortigen Öffnung des Spiegelgehäuses 14'. Im Bereich des Fügespalts 24 liegt keine Dichtungsanordnung vor, es kann jedoch analog zum Aufbau von Fig. 3 eine derartige - zusätzliche - Dichtungsanordnung oder Dichtlippe 30 vorgesehen werden. Diese Dichtlippe würde dann konkret den Bereich des Fügespalts 24 direkt schützen, wohingegen die in Fig. 7 dargestellte Dichtlippe 30 primär den Innenraum des Spiegelgehäuses 14" schützt.

Die wesentlichen Vorteile des Erfindungsgegenstandes lassen sich wie folgt zusammenfassen:
Befindet sich die Dichtungsanordnung 28 im unmittelbaren Nahbereich des Fügespalts 24 der Gelenkanordnung oder des Schwenklagers zwischen fahrzeugfestem und hierzu beweglichen Teil der Spiegelverstellanordnung und dichtet den Fügespalt 24 des Schwenklagers mittelbar gegen Umwelteinflüsse ab, ergibt sich der wesentliche Vorteil, dass das von der Dichtungsanordnung 28 erzeugte Gegenmoment gegen eine Verstellung aufgrund von Reib- und damit Hemmkräften wesentlich geringer ist.

Es liegt aufgrund der Dichtungsanordnung 28 eine weitaus geringere Verschmutzung der einzelnen Komponenten oder Elemente der Verstellanordnung 2 vor. Insbesondere werden etwaige Friktionselemente oder Friktionsflächen zwischen den beiden Elementen 4 und 6 vor Verschmutzung und damit vor vorzeitigem Verschleiß geschützt.

Die aerodynamischen Eigenschaften sind verbessert, da Spalte, welche Verwirbelungen oder Pfeifgeräusche erzeugen können, durch die Dichtungsanordnung 28 verschlossen werden.

Da die Spaltmaße wesentlich verringert werden bzw. die Spalte vollständig verschlossen werden können, ergibt sich eine optisch höhere Wertigkeit des gesamten Rückspiegels.

Ein weiterer wesentlicher Vorteil ist, dass durch die Dichtungsanordnung 28 Lichteinfall von außen in das Innere des Gehäuses 14 bzw. 14' bzw. 14" vermieden werden kann. Ein derartiger Lichteinfall ist bei bestimmten optischen oder optoelektronischen Ausstattungen des Rückspiegels bzw. der verwendeten Spiegelfläche oder der reflektierenden Fläche unerwünscht.

Durch die verbesserte Aerodynamik des gesamten Spiegels dahingehend, dass weniger Verwirbelungen vorliegen, können auch angrenzende Karosserieteile des Fahrzeugs besser vor Verschmutzungen geschützt werden.

Der Gegenstand der vorliegenden Erfindung ist nicht auf die konkret dargestellten und beschriebenen Ausführungsformen beschränkt. So kann beispielsweise die Form der Dichtlippe 30 abweichend von dem gezeigten Dreiecks- oder Keilprofil sein. Weiterhin können zwei oder auch drei einzelne Dichtlippen 30 parallel neben- bzw. hintereinander geschaltet werden. Genauso gut kann eine einzelne Dichtlippe 30 verwendet werden, welche eine Mehrzahl von dreieck- oder keilförmigen Vorsprüngen hat.

Anstelle oder zusätzlich zu der reflektierenden Fläche (Spiegel 12) kann der Rückspiegel auch eine oder mehrere Kameras oder sonstige Bild aufnehmende oder lichtempfindliche und/oder Licht emittierende Bauteile im Inneren des Gehäuses 14 oder 14' oder 14" aufweisen, die dann hinter einer Glasscheibe anstelle der Spiegelscheibe liegen oder durch eine teildurchlässige Spiegelscheibe hindurch arbeiten. Bei derart ausgestatteten Rückspiegeln ist der Schutz des Spiegelgehäuseinneren, der durch die Dichtungsanordnung 28 gewährleistet wird, besonders notwendig.

Es können auch mehrere Dichtungsanordnungen an einem einzelnen Rückspiegel vorgesehen werden. So kann z.B. die Bauform bzw. Dichtungsanordnung der Fig. 3 mit derjenigen von Fig. 7 kombiniert werden.

Beschrieben wurde insoweit zusammenfassend eine Rückspiegelverstellanordnung für Fahrzeuge, insbesondere für Nutzfahrzeuge, mit einem ersten fahrzeugseitigen Element, welches mittels einer Befestigungsanordnung im wesentlichen unbeweglich an dem Fahrzeug festgelegt ist; und einem zweiten beweglichen Element, welches gegenüber dem fahrzeugseitigen Element um wenigstens eine Achse verstellbar ist und welches wenigstens eine reflektierende Fläche aufweist. Wenigstens eines der beiden Elemente weist eine Dichtungsanordnung auf, welche zumindest teilweise in Gleitanlage mit dem entsprechenden anderen Element ist. Eines der beiden Elemente kann zumindest in einem Teilbereich eine konkave, insbesondere kugelschalenförmige Oberfläche aufweisen und das andere Element zumindest in einem Teilbereich eine hierzu komplementäre konvexe, insbesondere kugelflächenförmige Oberfläche, wobei beide Oberflächen im Zuge der Verstellung aufeinander abgleiten und wobei die Dichtungsanordnung einen Spalt zwischen den beiden Oberflächen unmittelbar abdichtet. Gegenstand der Erfindung ist weiterhin ein Rückspiegel für Fahrzeuge mit wenigstens einer derartigen Rückspiegelverstellanordnung.

### Bezugszeichenliste:

- 2: Verstellanordnung
- 4: erstes (fahrzeugseitiges) Element
- 6: zweites (bewegliches) Element
- 8: Sockel
- 10: Trägerplatte
- 12: Spiegel
- 14: Spiegelgehäuse
- 16: konvexe Oberfläche
- 18: Abschnitt von 4
- 20: konkave Oberfläche
- 22: Gehäuseöffnung
- 24: Gelenk- oder Fügespalt
- 26: Spaltöffnung
- 28: Dichtungsanordnung
- 30: Dichtlippe
- 32: zurückspringender Abschnitt
- 34: Scheibe
- 14': Spiegelgehäuse
- 14": Spiegelgehäuse

## Patentansprüche

1. Rückspiegelverstellanordnung für Fahrzeuge, insbesondere Nutzfahrzeuge, mit einem ersten fahrzeugseitigen Element (4) und einem zweiten beweglichen Element (6), welches mittels wenigstens eines Schwenklagers gegenüber dem fahrzeugseitigen Element (4) um wenigstens eine Achse verstellbar ist und welches wenigstens eine reflektierende Fläche (12) aufweist, wobei
eines der beiden Elemente (4, 6) zumindest in einem Teilbereich eine konkave, insbesondere kugelschalenförmige Oberfläche (20) aufweist und das andere Element (6, 4) zumindest in einem Teilbereich eine hierzu komplementäre konvexe, insbesondere kugelflächenförmige Oberfläche (16) aufweist, wobei beide Oberflächen (20, 16) im Zuge der Verstellung aufeinander abgleiten; und
wenigstens eines der beiden Elemente (4, 6) eine Dichtungsanordnung (28) aufweist, welche zumindest teilweise in Gleitanlage mit dem entsprechenden anderen Element ist und einen Fügespalt (24) des Schwenklagers gegen Umwelteinflüsse abdichtet,
**dadurch gekennzeichnet, dass**
die Dichtungsanordnung (28) im Bereich einer Gehäuseöffnung (22) angeordnet ist, durch welche das fahrzeugseitige Element (4) aus einem dem beweglichen Element (6) zugeordneten und mit diesem beweglichen Gehäuse (14) vorsteht, wobei die Dichtungsanordnung (28) unmittelbar zwischen der Gehäuseöffnung (22) und einem die konkave, insbesondere kugelschalenförmige Oberfläche (20) definierenden Abschnitt des fahrzeugseitigen Elements (4) und mittelbar auf den Fügespalt (24) zwischen den beiden Elementen (4, 6) wirkt.

2. Rückspiegelverstellanordnung nach Anspruch 1, **dadurch gekennzeichnet, dass** die Dichtungsanordnung (28) von einem Rand der Gehäuseöffnung (22) im Wesentlichen radial nach innen vorsteht und mit der konkaven, insbesondere kugelschalenförmigen Oberfläche (20) des fahrzeugseitigen Elements (4) zusammenwirkt.

3. Rückspiegelverstellanordnung nach Anspruch 1 oder 2, **dadurch gekennzeichnet, dass** die Dichtungsanordnung (28) im Nahbereich eines Fügespalteintritts (26) zwischen den beiden Oberflächen (20, 16) angeordnet ist.

4. Rückspiegelverstellanordnung nach Anspruch 2 oder 3, **dadurch gekennzeichnet, dass** sich die Dichtungsanordnung (28) ringförmig geschlossen im Wesentlichen entlang der gesamten Längenerstreckung des ringförmig umlaufenden Fügespalteintritts (26) erstreckt.

5. Rückspiegelverstellanordnung nach einem der vorhergehenden Ansprüche, **dadurch gekennzeichnet, dass** die Dichtungsanordnung (28) durch einen flexiblen Körper gebildet ist.

6. Rückspiegelverstellanordnung nach Anspruch 5, **dadurch gekennzeichnet, dass** der flexible Körper eine Dichtlippe (30) aus einem Elastomer oder Gummi ist.

7. Rückspiegelverstellanordnung nach Anspruch 5 oder 6, **dadurch gekennzeichnet, dass** die Dichtlippe (30) durch ein Zweikomponenten-Spritzverfahren an dem jeweiligen fahrzeugseitigen oder beweglichen Element (4, 6) bzw. Rand der Gehäuseöffnung (26) festgelegt ist.

8. Rückspiegelverstellanordnung nach Anspruch 5 oder 6, **dadurch gekennzeichnet, dass** die Dichtlippe (30) an dem jeweiligen fahrzeugseitigen oder beweglichen Element (4, 6) bzw. Rand der Gehäuseöffnung (26) angeklebt ist.

9. Rückspiegelverstellanordnung nach einem der Ansprüche 6 bis 8, **dadurch gekennzeichnet, dass** die Dichtlippe (30) ein im Querschnitt sich verjüngendes Dreiecks-, Keil-, Trapez- oder Rundprofil aufweist, wobei die freie Spitze des Profils in einem Kontaktbereich in abdichtender Anlage mit dem jeweiligen Element (4, 6) ist, gegenüber welchem abzudichten ist.

10. Rückspiegelverstellanordnung nach einem der Ansprüche 6 bis 9, **dadurch gekennzeichnet, dass** die Dichtlippe (30) unter Druck am Kontaktbereich anliegt.

11. Rückspiegel für Fahrzeuge, insbesondere für Nutzfahrzeuge, mit wenigstens einer Rückspiegelverstellanordnung (2) nach wenigstens einem der vorangehenden Ansprüche.

## Claims

1. An adjustment arrangement for rear view mirrors for vehicles, in particular commercial vehicles, with a vehicle-side first element (4) and a movable second element (6) that can be adjusted by at least one pivot support opposite the vehicle-side element (4) about at least one axis and which comprises at least one reflecting surface (12), wherein
one of the two elements (4, 6) comprises at least in a partial area a concave surface (20) in particular with the shape of a spherical shell and the other element (6, 4) has a complementary convex surface (16), in particular with the shape of a spherical shell at least in a partial area, wherein both surfaces (20, 16) slide over one another during the adjustment, and
at least one of the two elements (4, 6) comprises a sealing means (28) that has at least partially a sliding contact with the corresponding other element, and the sealing means (28) seals a joining slot (24) of the pivot support against environmental influences,
**characterized in that**
the sealing means (28) is arranged in the area of a housing opening (22) through which the vehicle-side element (4) projects from a housing (14) associated with the movable element (6) and that can move with the latter, wherein the sealing means (28) acts directly between the housing opening (22) and a section of the vehicle-side element (4), wherein this section defines the concave surface (20) that is in particular shaped like a spherical shell, and acts indirectly on the joining slot (24) between the two elements (4, 6).

2. The rear view mirror adjustment arrangement of claim 1, **characterized in that** the sealing means (28) projects substantially radially inward from an edge of the housing opening (22) and that the sealing means (28) acts on the concave surface (20) of the vehicle-side element (4) that is in particular shaped like a spherical shell.

3. The rear view mirror adjustment arrangement of claim 1 or 2, **characterized in that** the sealing means (28) is arranged in the vicinity of an entrance of a joining slot (26) between the two surfaces (20, 16).

4. The rear view mirror adjustment arrangement of claim 2 or 3, **characterized in that** the sealing means (28) is annularly closed and extends substantially along the entire longitudinal extent of the annular, circumferential entrance of the joining slot (26).

5. The rear view mirror adjustment arrangement of one of the previous claims, **characterized in that** the sealing means (28) is formed by a flexible body.

6. The rear view mirror adjustment arrangement of claim 5, **characterized in that** the flexible body is a sealing lip (30) consisting of an elastomer or rubber.

7. The rear view mirror adjustment arrangement of claim 5 or 6, **characterized in that** the sealing lip (30) is fixed by a two-component extrusion method on the respective vehicle-side or movable element (4, 6) or the edge of the housing opening (26).

8. The rear view mirror adjustment arrangement of claim 5 or 6, **characterized in that** the sealing lip (30) is adhered to the respective vehicle-side or movable element (4, 6) or edge of the housing opening (26).

9. The rear view mirror adjustment arrangement of one of claims 6 to 8, **characterized in that** the sealing lip (30) has a profile like a triangle, wedge, trapezoid or is round and which has a tapering cross section, wherein the free tip of the profile is in a contact range in sealing contact with the respective element (4, 6) against which the sealing is to take place.

10. The rear view mirror adjustment arrangement of one of claims 6 to 9, **characterized in that** the sealing lip (30) rests under pressure on the contact area.

11. A rear view mirror for vehicles, in particular for commercial vehicles, with at least one rear view mirror adjustment arrangement (2) according to at least one of the previous claims.

## Revendications

1. Système de réglage de rétroviseur pour véhicules, en particulier pour véhicules utilitaires, comprenant un premier élément côté véhicule (4) et un deuxième élément mobile (6), lequel peut être déplacé autour d'au moins un axe par rapport à l'élément côté véhicule (4) au moyen d'au moins un palier de pivotement et lequel comprend au moins une surface réfléchissante (12),
un des deux éléments (4, 6) présentant au moins dans une zone partielle une surface (20) concave, en particulier en forme de coussinet sphérique, et l'autre élément (6, 4) présentant au moins dans une zone partielle une surface convexe (16), en particulier en forme de surface sphérique, complémentaire de ladite surface concave, les deux surfaces (20, 16) glissant l'une sur l'autre au cours du déplacement ; et
au moins l'un des deux éléments (4, 6) comprenant un ensemble d'étanchéité (28), lequel est au moins en partie en appui coulissant avec l'autre élément correspondant et étanchéifie une fente de jonction (24) du palier de pivotement vis-à-vis des influences environnementales,
**caractérisé en ce que**
l'ensemble d'étanchéité (28) est agencé dans la zone d'une ouverture de boîtier (22) à travers laquelle l'élément côté véhicule (4) fait saillie d'un boîtier (14) associé à l'élément mobile (6) et mobile avec celui-ci, l'ensemble d'étanchéité (28) agissant directement entre l'ouverture de boîtier (22) et une section, définissant la surface (20) concave, en particulier en forme de coussin sphérique, de l'élément côté véhicule (4) et indirectement sur la fente de jonction (24) entre les deux éléments (4, 6).

2. Système de réglage de rétroviseur selon la revendication 1, **caractérisé en ce que** l'ensemble d'étanchéité (28) fait saillie sensiblement radialement vers l'intérieur d'un bord de l'ouverture de boîtier (22) et coopère avec la surface (20) concave, en particulier en forme de coussinet sphérique, de l'élément côté véhicule (4).

3. Système de réglage de rétroviseur selon la revendication 1 ou 2, **caractérisé en ce que** l'ensemble d'étanchéité (28) est agencé à proximité d'une entrée de fente de jonction (26) entre les deux surfaces (20, 16).

4. Système de réglage de rétroviseur selon la revendication 2 ou 3, **caractérisé en ce que** l'ensemble d'étanchéité (28) s'étend en forme d'anneau fermé sensiblement le long de toute la direction longitudinale de l'entrée de fente de jonction (26) à périphérie annulaire.

5. Système de réglage de rétroviseur selon l'une quelconque des revendications précédentes, **caractérisé en ce que** l'ensemble d'étanchéité (28) est formé par un corps flexible.

6. Système de réglage de rétroviseur selon la revendication 5, **caractérisé en ce que** le corps flexible est une lèvre d'étanchéité (30) faite d'un élastomère ou de caoutchouc.

7. Système de réglage de rétroviseur selon la revendication 5 ou 6, **caractérisé en ce que** la lèvre d'étanchéité (30) est fixée au moyen d'un procédé d'injection à deux composants sur l'élément (4, 6) côté véhicule ou mobile respectif ou sur le bord de l'ouverture de boîtier (26).

8. Système de réglage de rétroviseur selon la revendication 5 ou 6, **caractérisé en ce que** la lèvre d'étanchéité (30) est collée sur l'élément (4, 6) côté véhicule ou mobile respectif ou sur le bord de l'ouverture de boîtier (26).

9. Système de réglage de rétroviseur selon l'une quelconque des revendications 6 à 8, **caractérisé en ce que** la lèvre d'étanchéité (30) comprend un profil triangulaire, cunéiforme, trapézoïdal ou arrondi se rétrécissant en section transversale, la pointe libre du profil, dans une zone de contact, se situant en appui étanche avec l'élément (4, 6) respectif vis-à-vis duquel il doit être étanchéifié.

10. Système de réglage de rétroviseur selon l'une quelconque des revendications 6 à 9, **caractérisé en ce que** la lèvre d'étanchéité (30) s'applique sous pression sur la zone de contact.

11. Rétroviseur pour véhicules, en particulier pour véhicules utilitaires, comprenant au moins un système de réglage de rétroviseur (2) selon au moins l'une des revendications précédentes.
